# EUROPÄISCHE PATENTANMELDUNG

(11) **EP 4 006 741 A1**
(43) Veröffentlichungstag der Anmeldung: **01.06.2022**
(21) Anmeldenummer: 21207104.7
(22) Anmeldetag: 09.11.2021
(51) Int. Cl.: G06F 16/2455

(54) **VERFAHREN ZUM VERWALTEN VON DATEN VON EINER VIELZAHL VON ENTITÄTEN UND VORRICHTUNG ZUR DATENVERARBEITUNG**

(30) Priorität: 16.11.2020 DE 102020214362
(71) Anmelder: VOLKSWAGEN AG, 38440 Wolfsburg (DE)
(72) Erfinder: Brüggemann-Heuter, Rainer, 38116 Braunschweig (DE); Jäschke, Dirk, 38446 Wolfsburg (DE)

(57) **Zusammenfassung**

Die vorliegende Erfindung betrifft ein Verfahren zum Verwalten von Daten von einer Vielzahl von Entitäten in zumindest einer Datenbank. Die vorliegende Erfindung betrifft außerdem eine Vorrichtung zur Datenverarbeitung, die dazu eingerichtet ist, ein solches Verfahren auszuführen.

## Beschreibung

Die vorliegende Erfindung betrifft ein Verfahren zum Verwalten von Daten von einer Vielzahl von Entitäten in zumindest einer Datenbank. Die vorliegende Erfindung betrifft außerdem eine Vorrichtung zur Datenverarbeitung, die dazu eingerichtet ist, ein solches Verfahren auszuführen.

Mit der Verwaltung von Entitäten kann abhängig von der Anzahl von erfassten Entitäten und dem Umfang der mit jeder Entität verbundenen Daten ein erheblicher Aufwand in Bezug auf die zugrunde liegende Datenverarbeitung einhergehen.

US 2017/0327247 A1 betrifft ein Verfahren und eine Vorrichtung zur Herstellung eines Produkts. Das Verfahren umfasst die Erstellung eines Produktplans, der Zeiteinheiten umfasst, während der die Herstellung des Produkts erfolgt, wobei die Zeiteinheiten in Phasen der Herstellung gruppiert werden. Ferner umfasst der Produktplan auch Instanzen, die Arbeiten an Systemen für das Produkt ausführen, und Arbeitsaufgaben, die von den Instanzen während der Fertigungstage ausgeführt werden. Die Herstellung des Produkts wird mit Hilfe des Produktplans gesteuert.

Es besteht Bedarf an einer Verbesserung der Effizienz bei der Verwaltung von Entitäten. Es ist daher Aufgabe der vorliegenden Erfindung das Verwalten von Entitäten effizienter zu gestalten.

Die Aufgabe wird gemäß einem ersten Aspekt der Erfindung dadurch gelöst, dass ein Verfahren zum Verwalten von Daten von einer Vielzahl von Entitäten in zumindest einer Datenbank, das Verfahren aufweisend: Erzeugen zumindest eines für zumindest einen Datenbankzustand indikativen Kontrollsignals in Abhängigkeit der Auffindbarkeit wenigstens einer ersten Entität unter der Vielzahl von Entitäten in der Datenbank, wobei zumindest eine spezifische erste Steuergröße mit jeder der wenigstens einen ersten Entität in der Datenbank assoziiert ist, und in Abhängigkeit der Auffindbarkeit wenigstens einer der wenigstens einen ersten Entität als zweite Entität unter der Vielzahl von Entitäten in der Datenbank mittels eines Steuerbefehls vorgeschlagen wird.

Der Erfindung liegt somit die überraschende Erkenntnis zugrunde, dass die Kenntnis bereits bestehender Assoziierungen für in der Datenbank bereits hinterlegte Entitäten vorteilhaft für andere Entitäten verwendet werden kann, wenn alle betroffenen Entitäten gleichen Rahmenbedingungen genügen.

Wenn beispielsweise eine neue Entität mit einer (oder mehreren) ersten Steuergrößen in der Datenbank angelegt werden soll, kann auf die Datensätze bereits bestehender Entitäten verwiesen werden, soweit zu denen diese erste Steuergrößen bereits hinterlegt sind. Es kann damit vermieden werden, gleichlautende Daten mehrerer Entitäten mehrfach in der Datenbank abzuspeichern. Stattdessen können gleiche Daten durch Verweis auf andere Entitäten einbezogen werden.

Gleichermaßen kann auch eine bestehende Datenbank, in der eine Vielzahl von Entitäten gespeichert ist, mittels des Verfahrens auf gleiche erste Steuergrößen bei mehreren Entitäten überprüft werden. Anhand des Kontrollsignals können dann weitere Maßnahmen ergriffen werden.

Wenn beispielsweise bereits mehrere Entitäten in der Datenbank hinterlegt sind, können die gleichen Daten angezeigt und ausgehend davon noch nicht genutzte Optimierungen, etwa in Form von Datenreduzierung, an den Daten der Datenbank vorgenommen werden. Auch eine bloße Visualisierung der gleichen Daten ist möglich.

Indem vorliegend ein Kontrollsignal erzeugt wird, kann besonders einfach und effizient der Datenbankzustand, also welche Daten darin bereits mit welchen Assoziierungen zu unterschiedlichen Entitäten hinterlegt sind, ermittelt werden. Ausgehend von dem Kontrollsignal bzw. dem Datenbankzustand können wiederum entsprechende Maßnahmen eingeleitet werden.

Beispielsweise ist es damit besonders einfach möglich, in unterschiedlicher Weise auf die Datenbank oder andere technische Systeme, wie etwa ein Modul eines Software- und/oder Rechnersystems, einzuwirken. Je nach Datenbankzustand kann das Kontrollsignal eine entsprechende Form annehmen, die für den jeweiligen Datenbankzustand indikativ ist.

Beispielsweise kann somit je nach Form des Kontrollsignals einer von mehreren Modi ausgewählt werden, gemäß dem auf die Datenbank oder ein anderes technisches System eingewirkt wird.

Ein Modus kann dann beispielsweise vorgeben, wie die Daten einer neuen Entität in der Datenbank abgelegt werden sollen. Dies kann etwa durch eine Anweisung erfolgen, welche der Daten der neuen Entität in der Datenbank explizit hinterlegt, beispielsweise gespeichert, werden und welche der Daten der neuen Entität in der Datenbank implizit, beispielsweise durch Verweis auf alle oder einige Daten einer oder mehrerer bereits bestehender Entitäten, hinterlegt werden. Entsprechend kann ein Modus beispielsweise auch vorgeben, welche Daten einer bestehenden Entität durch Verweis auf eine andere Entität ersetzt werden können.

In beiden Fällen lässt sich somit in einfach und effizienter Weise der Inhalt einer Datenbank verwalten und/oder optimieren. Gerade der Einsatz auch bei bestehenden Datenbanken macht das vorgeschlagene Verfahren universell einsetzbar, da es leicht auch in bestehende Vorgänge eingebunden werden kann.

Indem der Steuerbefehl eingesetzt wird, können die für die Bezugnahme in Frage kommenden Entitäten auf solche eingeschränkt werden, die gewisse Rahmenbedingungen erfüllen und damit über den Steuerbefehl, der diese Rahmenbedingungen beschreiben kann, aufgefunden werden können. Entitäten, die zwar mit der spezifischen ersten Steuergröße assoziiert sind, die aber den Rahmenbedingungen nicht genügen, und daher mittels des Steuerbefehls nicht aufgefunden werden können, können so unberücksichtigt bleiben.

Beispielsweise kann der Zugriff auf gewisse Entitäten eine bestimmte Berechtigung erfordern. Solange dann die das Verfahren ausführende Instanz (beispielsweise ein Rechner-Prozess) nicht über eine ausreichende Berechtigungen verfügt, darf die Instanz diese gewisse Entitäten nicht berücksichtigen oder Kenntnis von ihr erlangen.

Beispielsweise können die Daten gewisser Entitäten in einem proprietären Format und/oder in einer verschlüsselten Darstellung in der Datenbank gespeichert sein. Ein Verweis von einer neuen oder bereits bestehenden Entität auf die Daten einer solchen Entität wäre in solchen Fällen unerwünscht. Diese Entitäten können daher von vornherein ausgeschlossen werden, indem der Steuerbefehl entsprechend gewählt wird. Dadurch kann die Auswahl an in Frage kommender Entitäten effizienter durchgeführt werden.

Mit anderen Worten ausgedrückt, die für grundsätzlich zur Verfügung stehenden Entitäten können mittels des Steuerbefehls eingegrenzt werden.

Ein Steuerbefehl kann beispielsweise eine Anweisung aufweisen oder darstellen, anhand derer eine bestimmte Ergebnismenge von Daten in der Datenbank ermittelt und/oder aus ihr abgerufen werden kann. Beispielsweise können in der Anweisung eine oder mehrere Bedingungen formuliert sein, und die Daten in der Datenbank, die den formulierten Bedingungen genügen, bilden die Ergebnismenge von Daten. Die Daten können Daten der Entität, wie insbesondere erste Steuergrößen, aufweisen.

Wie die Ausführungen zeigen, ist es für die Anwendung des Verfahrens nicht notwendig dass in der Datenbank auf Grundlage des Kontrollsignals Daten neu abgespeichert oder geändert werden. Auch lediglich zur Vorbereitung von Optimierungen oder auch lediglich zur Überprüfung des Datenbankzustands kann das Verfahren vorzugsweise eingesetzt werden.

Das Kontrollsignal kann damit wertvolle Information über das Innere der Datenbank liefern. So kann von außen gezielt unter Berücksichtigung des Kontrollsignals agiert werden.

Freilich kann das Kontrollsignal aber dazu eingesetzt werden, die Datenbank mit neuen Daten zu füllen oder bestehende Daten abzuändern, etwa indem bestehende Daten durch Verweise auf andere bestehende Daten ersetzt werden.

Beispielsweise kann das Verfahren dazu eingesetzt werden, eine bestehende Datenbank lediglich zu analysieren und mittels des Kontrollsignals etwa festzustellen, welche Daten in Bezug auf eine Entität auch bei einer (oder sogar mehreren) anderen Entität vorliegen. Optional könnten dann anschließend beispielsweise die redundanten Daten von einer oder mehrere Entitäten durch einen Verweis auf eine einzige Entität bzw. auf deren Daten ersetzt werden.

Ein weiteres Beispiel, für den Einsatz des Verfahrens ist es, dass die Daten aus der Datenbank, die etwa eine Produktiv-Datenbank darstellt, welche im laufenden Betrieb eingesetzt wird, in eine andere Datenbank, die etwa eine Backup-Datenbank darstellt, zu Sicherungszwecken übertragen werden sollen.

Auf Basis des Kontrollsignals können dann die Daten in der anderen Datenbank effizienter organisiert werden, um so Systemressourcen, wie Speicherplatz, zu sparen und um die Übertragung der Daten effizienter gestalten zu können.

Mit anderen Worten, beispielsweise beim Kopieren der Daten von der Datenbank (z.B. Haupt-Datenbank / Master-Datenbank) in die andere Datenbank (z.B. Backup-Datenbank / Slave-Datenbank) können gewisse Daten in der anderen Datenbank, soweit das Kontrollsignal für einen entsprechenden Datenbankzustand indikativ ist, durch Verweise ersetzt werden.

Die vorliegende Erfindung leistet damit den erheblichen Vorteil, über mehrere Entitäten hinweg gemeinsame Daten zu erkennen und so ein Kontrollsignal erzeugen zu können, das die Information über den jeweiligen Datenbankzustand in einer geeigneten Form bereitstellt, um damit beispielsweise technische Systeme beeinflussen zu können.

Indem das Kontrollsignal in einer sozusagen doppelstufigen Abhängigkeitsprüfung erzeugt wird, nämlich einmal in Abhängigkeit erster und einmal in Abhängigkeit zweiter Entitäten, kann ein besonders aussagekräftiges Kontrollsignal erhalten werden. Der Datenbankzustand lässt sich somit besonders feingranular spezifizieren und darstellen. Gleichzeitig führt dies aber auch zu einer besonders hohen Effizienz.

Die Erfindung kann dabei selbst bei der Verwaltung von sehr vielen Entitäten, also beispielsweise mehr als 10, oder mehr als 100, oder mehr als 1.000, oder sogar mehr als 10.000 Entitäten, besonders effizient eingesetzt werden. Aufgrund des Steuerbefehls muss die tatsächliche Anzahl an Entitäten kein limitierender Faktor für die Anwendung des erfindungsgemäßen Verfahrens und seine Ausführungsformen sein. Das Verfahren erweist sich daher als äußerst robust, selbst bei umfangreichen Datenbanken. Auch und gerade wenn sehr viele erste Steuergrößen mit den Entitäten verbunden sind, ist das Verfahren äußerst effektiv anwendbar.

Die Erfindung kann dabei besonders effektiv eingesetzt werden, wenn in bevorzugten Ausführungsformen die Entitäten Projekte sind, etwa Kraftfahrzeug-Projekte, wie insbesondere solche im Bereich der Fahrzeugtechnik oder der Automobilherstellung. Hier können oft besonders viele Entitäten vorhanden sein, die mit den Entitäten verwaltet werden müssen. Das vorgeschlagene Verfahren erlaubt es insbesondere in diesem Zusammenhang, Gemeinsamkeiten und Unterschiede der in der Datenbank hinterlegten Entitäten bzw. ihrer assoziierten Steuergrößen effizient identifizieren und behandeln zu können.

Erste Steuergrößen können in bevorzugten Ausführungsformen Komponenten der Entität darstellen und/oder definieren. Bei Projekten, wie Kraftfahrzeug-Projekten, können erste Steuergrößen Komponenten des Kraftfahrzeugs sein.

Eine spezifische erste Steuergröße kann eine erste Steuergröße sein, die für die Erzeugung des Kontrollsignals vorgegeben oder vorggebar ist. In dem Verfahren kann dann beispielsweise eine (oder mehrere) erste Steuergröße(n) ausgewählt und als spezifische erste Steuergröße(n) zur Festlegung der ersten Entitäten eingesetzt werden. Vorzugsweise stellen alle Entitäten, die jeweils mit allen als spezifische erste Steuergrößen ausgewählte erste Steuergrößen assoziiert sind, insbesondere in der Datenbank, erste Entitäten dar.

Diejenigen der ersten Entitäten die auch mittels des Steuerbefehls auffindbar sind, sind definitionsgemäß zweite Entitäten. Eine zweite Entität ist damit gleichzeitig auch eine erste Entität. Eine erste Entität muss aber nicht unbedingt eine zweite Entität sein.

Beispielsweise können zwei Entitäten der Vielzahl von Entitäten mit einer gleichen ersten Steuergröße assoziiert sein. Allerdings könnte es dann der Fall sein, dass mittels des Steuerbefehls nicht beide Entitäten aufgefunden werden können. Wenn beispielsweise der Steuerbefehl verlangt, dass nur Entitäten, die nicht mehr als ein bestimmtes Maß an Systemressourcen beanspruchen, verwendet werden dürfen, könnte es sein, dass zumindest eine der beiden Entitäten mehr Systemressourcen beanspruchen würde und damit nicht unter dem Steuerbefehl auffindbar ist.

Die Schnittmenge der Entitäten, die mit der/den ersten Steuergrößen assoziiert sind, und der Entitäten, die mittels des Steuerbefehls auffindbar sind, sind zweite Entitäten.

Vorzugsweise ist die wenigstens eine spezifische erste Steuergröße vorgegeben oder vorgebbar. Vorzugsweise weisen die Entitäten jeweils ein Projekt, insbesondere ein Projekt im Kraftfahrzeug-Bereich, wie beispielsweise der Fahrzeugtechnik und/oder der Automobilherstellung, auf oder stellen dieses dar.

Vorzugsweise weist jede erste Steuergröße einen Wert auf, der vorzugsweise seinerseits einen Parameter und einen ihm zugewiesenen Wert aufweist oder darstellt. Vorzugsweise weisen die ersten Steuergrößen Werte auf zu Komponenten eines Kraftfahrzeugs, insbesondere zu Komponenten, die ausgewählt sind aus einer ersten Gruppe von Komponenten aufweisend die Komponenten Antriebsart, Radstand, Sitzposition, Überhang, Reifen-Durchmesser-Klasse, Plattenspur vorne, Plattenspur hinten, aus einer zweiten Gruppe von Komponenten aufweisend die Komponenten Stoßstange vorne, Stoßstange hinten, Motorhaube, Dach, Tür vorne oben, Tür vorne unten, Türaußenblech vorn, Türaußenblech hinten, Kotflügel vorn, Windschutzscheibe, Motorhaube, Dach, Heckklappe, Seitenteil und/oder aus einer dritten Gruppe von Komponenten aufweisend die Komponenten Lenkrad, Mittelkonsole, I-Tafel, Türinnenverkleidung vorn, Türinnenverkleidung hinten. Dann könnte eine erste Steuergröße beispielsweise den Wert "Antriebsart=XYZ" aufweisen, wobei "Antriebsart" der Parameter und "XYZ" der dem Parameter zugewiesene Wert ist.

Vorzugsweise ist jede der Vielzahl von Entitäten mit wenigstens einer ersten Steuergröße, vorzugsweise mit einer Vielzahl von ersten Steuergrößen, assoziiert. Vorzugsweise sind zumindest einige Entitäten der Vielzahl von Entitäten mit gleichen ersten Steuergrößen assoziiert.

Vorzugsweise macht das Kontrollsignal die ersten und/oder zweiten Entitäten identifizierbar oder identifiziert diese, insbesondere indem es einen entsprechenden Datenstrom aufweist. Dadurch kann besonders effizient auf die Datenbank eingewirkt werden, oder andere technische Systeme basierend auf dieser Information gesteuert und/oder kontrolliert werden.

Vorzugsweise kann das Kontrollsignal indikativ für wenigstens zwei Datenbankzustände, vorzugsweise für drei, vier, fünf, sechs, mehr als sechs, mehr als zehn oder mehr als fünfzig Datenbankzustände, sein. Dies ermöglicht es, mit nur einem einzigen Kontrollsignal unterschiedliche Datenbankzustände abbilden zu können. Dies ist sehr effizient.

Vorzugsweise sind wenigstens zwei, vorzugsweise mehr als zwei, mehr als drei, mehr als vier oder mehr als fünf, erste Entitäten mittels des Steuerbefehls als zweite Entitäten auffindbar.

Vorzugsweise kann mit dem Verfahren ein Leitstand realisiert werden. Denn das Verfahren erlaubt es, ein Kontrollsignal auf Grundlage von Daten zu erzeugen. Mit diesem Kontrollsignal können wiederum die Datenbank und/oder andere technischer Systeme kontrolliert, beeinflusst, gesteuert und/oder geregelt werden sowie Daten ausgegeben und verarbeitet werden. Anders ausgedrückt, das Verfahren erlaubt es, Maßnahmen anhand von bestehenden Daten zu treffen, insbesondere von in der Datenbank bestehenden Daten und/oder anhand des Kontrollsignals.

Die vorliegende Erfindung ist damit gerade auch für den Bereich der Fahrzeugtechnik besonders interessant.

Soweit an entsprechenden Stellen nichts anderes gesagt, oder aus dem jeweiligen Kontext ersichtlich ist, ist die Formulierung, dass eine Steuergröße mit einer Entität assoziiert ist so zu verstehen, dass durch die Assoziierung anhand der Entität die Steuergröße (und/oder vice versa) direkt oder indirekt ermittelbar ist, also eine direkte oder indirekte Assoziierung vorliegt. Eine direkte Ermittlung wäre beispielsweise dadurch möglich, dass zusammen mit der Entität ein Verweis auf die Steuergröße (und/oder zusammen mit der Steuergröße ein Verweis auf die Entität) gespeichert wird. Bei einer indirekten Ermittlung ist der Verweis von der Entität auf die Steuergröße (bzw. umgekehrt) beispielsweise nur über einen oder mehrere Zwischenschritte zu ermitteln. Zum Beispiel könnte insoweit eine Hilfs-Größe eingesetzt werden, die jeweils mit der Entität und der Steuergröße direkt assoziiert ist und dadurch die Entität und die Steuergröße miteinander indirekt assoziiert sind. Freilich könnten auch mehrere Hilfs-Größen eingesetzt werden. Gleiches gilt entsprechend auch für die Formulierung, dass eine Steuergröße mit einer anderen Steuergröße assoziiert ist.

Das Verfahren kann in bevorzugten Ausführungsformen computer-implementiert sein.

In bevorzugten Ausführungsformen kann vorgesehen sein, dass der Steuerbefehl zumindest eine, insbesondere vorgegebene oder vorgebbare, zweite Steuergröße aufweist und/oder auf ihr basiert; die zumindest eine spezifische erste Steuergröße mit zumindest einer dritten Steuergröße assoziiert ist; eine Vielzahl von ersten Steuergrößen mit jeder der ersten Entitäten assoziiert ist und die ersten Steuergrößen in Gruppen eingeteilt werden können oder sind, wobei die ersten Steuergrößen einer Gruppe mit einer gleichen dritten Steuergröße assoziiert sind; und/oder der Steuerbefehl zumindest eine der dritten Steuergröße aufweist und/oder auf ihr basiert.

Eine zweite Steuergröße ermöglicht es besonders effizient, den Steuerbefehl aufzubauen und/oder vorzugeben. So müssen lediglich die relevanten zweiten Steuergrößen angegeben werden, und der Steuerbefehl kann dynamisch zu einer Zeit angelegt werden, zu der er benötigt wird. Auch lassen sich mittels unterschiedlicher zweiter Steuergrößen besonders einfach unterschiedliche Steuerbefehle realisieren. Dies macht das Verfahren universell einsetzbar und seine Handhabung sehr effizient.

Zweite Steuergrößen können in bevorzugten Ausführungsformen Eigenschaften der Entität und/oder ihren Komponenten beschreiben oder definieren. Bei Projekten, wie Kraftfahrzeug-Projekten, können zweite Steuergrößen Herstellungs- und/oder Vertriebs-Spezifikationen des Kraftfahrzeugs und/oder seinen Komponenten beschreiben oder definieren.

Vorzugsweise weist jede zweite Steuergröße einen Wert auf, der vorzugsweise seinerseits einen Parameter und einen ihm zugewiesenen Wert aufweist oder darstellt. Vorzugsweise weisen die zweiten Steuergrößen Werte auf zu Eigenschaften, die ausgewählt sind aus einer Gruppe von Eigenschaften aufweisend die Eigenschaften Kontinent, Region, Land, Ort, Startzeitpunkt, Endzeitpunkt, Zeitraum, Konzernbezeichnung, Fahrzeugbezeichnung, Karosserieform, Baukastenbezeichnung, Start of Production (SOP), End of Production (EOP), Vorgänger, Nachfolger, Marktanforderungen, Gesetze, Verkaufsregion, Standortvorgaben, Randbedingungen. Dann könnte eine zweite Steuergröße beispielsweise den Wert "Kontinent=XYZ" aufweisen, wobei "Kontinent" der Parameter und "XYZ" der dem Parameter zugewiesene Wert ist.

Vorzugsweise ist jede der Vielzahl von Entitäten mit wenigstens einer zweiten Steuergröße, vorzugsweise mit einer Vielzahl von zweiten Steuergrößen, assoziiert. Vorzugsweise sind zumindest einige Entitäten der Vielzahl von Entitäten mit gleichen zweiten Steuergrößen assoziiert.

Eine dritte Steuergröße ermöglicht es besonders einfach, erste Steuergrößen zu gruppieren. Dadurch lassen sich erste Steuergrößen in der Datenbank besser organisieren und auffinden, da sie über ihre gemeinsame dritte Steuergröße angesprochen und aufgefunden werden können.

Vorzugsweise sind für jede der Vielzahl von Entitäten wenigstens zwei mit der jeweiligen Entität assoziierten ersten Steuergrößen mit der gleichen dritten Steuergröße assoziiert.

Vorzugsweise gruppieren erste dritte Steuergrößen erste Steuergrößen mit Werten zu Komponenten der ersten Gruppe, zweite dritte Steuergrößen erste Steuergrößen mit Werten zu Komponenten der zweiten Gruppe und/oder dritte dritte Steuergrößen erste Steuergrößen mit Werten zu Komponenten der dritten Gruppe. Beispielsweise gruppiert die erste dritte Steuergröße erste Steuergrößen mit Werten zur Plattform eines Kraftfahrzeug bzw. dessen Projekt, die zweite dritte Steuergröße erste Steuergrößen mit Werten zum Exterieur eines Kraftfahrzeug bzw. dessen Projekt und/oder die dritte dritte Steuergröße erste Steuergrößen mit Werten zum Interieur eines Kraftfahrzeug bzw. dessen Projekt.

Vorzugsweise weisen erste, zweite und/oder dritte dritte Steuergrößen jeweils einen ersten, zweiten bzw. dritten Wert auf, beispielsweise Plattform, Exterieur bzw. Interieur.

Vorzugsweise sind zumindest einige der Entitäten der Vielzahl von Entitäten zumindest paarweise assoziiert. Somit ist die eine Entität anhand der anderen Entität auffindbar. Vorzugsweise sind eine oder mehrere jeweils der ersten und/oder zweiten Steuergrößen für die assoziierten Entitäten gleich.

In bevorzugten Ausführungsformen kann vorgesehen sein, dass das Kontrollsignal indikativ ist für einen ersten Datenbankzustand, wenn wenigstens eine erste Entität auffindbar ist und diese als zweite Entität auffindbar ist, insbesondere das Kontrollsignal indikativ ist für einen ersten ersten Datenbankzustand, wenn genau eine erste Entität auffindbar ist und diese als zweite Entität auffindbar ist und/oder das Kontrollsignal indikativ ist für einen zweiten ersten Datenbankzustand, wenn mehr als eine erste Entität auffindbar ist und diese als zweite Entitäten auffindbar sind; das Kontrollsignal indikativ ist für einen zweiten Datenbankzustand, wenn wenigstens eine erste Entität auffindbar ist und davon keine als zweite Entität auffindbar ist; das Kontrollsignal indikativ ist für einen dritten Datenbankzustand, wenn keine erste Entität auffindbar ist; und/oder das Kontrollsignal indikativ ist für einen vierten Datenbankzustand und/oder das Kontrollsignal ein Alarmsignal aufweist, wenn zumindest eine Kontrollgröße die spezifische erste Steuergröße in Verbindung mit zumindest einer der zweiten Steuergrößen als ausgezeichnete erste und zweite Steuergrößen definiert.

Das Kontrollsignal kann indikativ für ausgezeichnete Datenbankzustände sein, wodurch es möglich ist, auf bestimmte Situationen in Bezug auf in der Datenbank hinterlegte Daten und Datenstrukturen, wie etwa die Beziehungen der Daten untereinander, gezielt reagieren zu können.

Damit eignet sich das Verfahren besonders gut für eine feingranulare Ermittlung des Datenbankzustands. Entsprechend wird die Möglichkeit einer besonders präzisen Ermittlung des Datenbankzustands ermöglicht. Somit kann wenn gewünscht und notwendig zielgerichtet auf einen bestimmten Datenbankzustand reagiert werden.

Der erste Datenbankzustand beispielsweise erlaubt es festzustellen, dass die spezifische erste Steuergröße mit bestimmten durch den Steuerbefehl auffindbaren Entitäten verbunden ist. Wenn beispielsweise eine weitere Entität in Verbindung mit der ersten Steuergröße in der Datenbank abgelegt werden soll, kann auf bereits bestehende Entitäten verwiesen werden. Dazu kann das Kontrollsignal hilfreich in den Speicher- und/oder Analysevorgang eingebunden werden und auf den ersten Datenbankzustand hin geprüft werden. Die Möglichkeit, den ersten Datenbankzustand weiter aufzugliedern in einen ersten ersten und zweiten ersten Datenbankzustand erlaubt es, den Datenbestand noch gezielter zu ermitteln.

Dies kann besonders hilfreich auch zur Organisation der Datenbank sein.

Beispielsweise ist es möglich, zu erkennen, dass keine Redundanzen vorhanden sind, wenn ein erster erster Datenbankzustand vorliegt. So kann etwa das Speichermanagement auf der (einzigen) bestehenden Entitäten beim Abspeichern Bezug nehmen. Dadurch wird der Speichervorgang und Systemressourcen effizient genutzt.

Beispielsweise ist es möglich, Redundanzen effizient zu erkennen und darauf zu reagieren, wenn ein zweiter erster Datenbankzustand vorliegt. So kann etwa das Speichermanagement auf eine der wenigstens zwei bestehenden Entitäten beim Abspeichern Bezug nehmen. So könnte beispielsweise das Speichermanagement unter den in Frage kommenden Entitäten diejenige auswählen, welche in Bezug auf weitere Aspekte ein effizientes Speichern ermöglicht. Dies kann etwa dergestalt sein, dass eine der möglichen Entitäten weitere gemeinsame Assoziierungen wie die zu speichernde Entität aufweist. Dann kann es vorteilhaft sein, auf die Entität Bezug zu nehmen, die die größten Gemeinsamkeiten hat. Dadurch wird der Speichervorgang und Systemressourcen effizient genutzt.

In bevorzugten Ausführungsformen kann das Kontrollsignal, insbesondere bei dem zweiten ersten Datenbankzustand, auch Informationen über die Anzahl von Entitäten, die jeweils die geforderten Kriterien erfüllen, aufweisen. Dies kann beispielsweise in Form eines entsprechenden Datenstroms erfolgen. Damit kann die Analyse des Datenbestands besonders einfach um weitere Aspekte ergänzt und der Datenbankzustand sicherer ermittelt werden.

Der zweite Datenbankzustand beispielsweise erlaubt es festzustellen, dass die spezifische erste Steuergröße mit Entitäten verbunden ist, diese aber nicht durch den Steuerbefehl auffindbar sind. Wenn beispielsweise eine weitere Entität in Verbindung mit der ersten Steuergröße in der Datenbank abgelegt werden soll, kann so erkannt werden, dass das Speichermanagement die Entität womöglich gänzlich neu abspeichern muss, da in der Datenbank keine Entität besteht, die kompatibel ist mit dieser weiteren Entität. Dazu kann das Kontrollsignal hilfreich in den Speicher- und/oder Analysevorgang eingebunden werden und auf den zweiten Datenbankzustand hin geprüft werden. Es ist beispielsweise auch möglich, bei vorliegen des zweiten Datenbankzustands, einen Speichervorgang nicht oder mit zumindest zum Teil anderen ersten Steuergrößen durchzuführen.

Der dritte Datenbankzustand beispielsweise erlaubt es festzustellen, dass die spezifische erste Steuergröße noch mit keiner Entitäten verbunden ist. Wenn nun eine neue Entität in Verbindung mit der spezifische ersten Steuergröße in der Datenbank abgelegt werden soll, kann so erkannt werden, dass das Speichermanagement die Entität vollständig abspeichern muss, da keine kompatible Entität bereits in der Datenbank hinterlegt ist. Dazu kann das Kontrollsignal hilfreich in den Speicher- und/oder Analysevorgang eingebunden werden und auf den dritten Datenbankzustand hin geprüft werden.

Das Einbeziehen von Kontrollgrößen stellt eine effiziente und flexible Möglichkeit dar, eine Beziehung zwischen einer ersten und einer zweiten Steuergröße herzustellen. Wenn eine erste und zweite Steuergröße ausgezeichnete Steuergrößen in Bezug auf eine Kontrollgröße sind, kann dies bedeuten, dass die beiden Steuergrößen nicht gemeinsam in der Datenbank abgelegt werden können. Oder es kann bedeuten, dass die beiden Steuergrößen kompatibel miteinander sind und daher gemeinsam in der Datenbank abgelegt werden können.

Eine Kontrollgröße kann daher vorzugsweise definieren, dass die ausgezeichnete erste Steuergröße und die ausgezeichnete zweite Steuergröße der gleichen Entität gleichzeitig zugeordnet sein können und/oder nicht zugeordnet sein können. Das bedeutet insbesondere, dass, sobald die ausgezeichnete erste und ausgezeichnete zweite Steuergröße eine (von einer oder sogar mehreren) durch die Kontrollgröße definierte Bedingung erfüllt und/oder nicht erfüllt, ein entsprechendes für einen vierten Datenbankzustand indikatives Kontrollsignal erzeugt wird, bzw. dieses ein entsprechendes Alarmsignal aufweist. Eine Gesetzmäßigkeit kann in Bezug auf die Datenbank vorliegen, oder auf außerhalb der Datenbank und des Verfahrens liegende Umstände abstellen, beispielsweise System-Eigenschaften. Durch eine solche Kontrollgröße kann beispielsweise ein auf die Entität wirkender Einflussfaktor zuverlässig abgebildet werden und/oder einen solchen darstellen.

So kann zuverlässig erreicht werden, dass in der Datenbank nur miteinander kompatible Daten zu einer Entität hinterlegt sind. Beispielsweise kann die Kontrollgröße eine Gesetzmäßigkeit repräsentieren, die für die ausgezeichnete erste und zweite Steuergröße Anwendung findet. Und wenn die erste und zweite Steuergröße mit der Gesetzmäßigkeit (nicht) in Einklang stehen, weist das Kontrollsignal einen entsprechenden Datenbankzustand bzw. ein entsprechendes Alarmsignal auf.

Beispielsweise kann in der Datenbank ein Feld zum Speichern der ersten Steuergröße und ein Feld zum Speichern der zweiten Steuergröße vorgesehen sein. Als ein Beispiel für eine Gesetzmäßigkeit kann beispielsweise die maximale Länge des Zeichen-Inhalts der beiden Felder verstanden werden. In Summe darf die Anzahl der Zeichen in den beiden Feldern dann beispielsweise einen bestimmten Wert nicht überschreiten.

Mit einer Kontrollgröße kann ein unzulässiger Datenbankinhalt sofort erkannt werden, da bei Überschreiten der maximalen Zeichenanzahl das Kontrollsignal indikativ für einen vierten Datenbankzustand wäre bzw. das Kontrollsignal ein entsprechendes Alarmsignal aufweist. Damit lässt sich die Datenbank zuverlässig betreiben.

Das Alarmsignal kann beispielsweise gesondert weiterverarbeitet werden und ist daher besonders vorteilhaft. Allgemein kann so mit den Kontrollgrößen, und insbesondere mit dem Alarmsignal, effizient etwaige Maßnahmen ergriffen werden, wenn diese notwendig sind.

Vorzugsweise wird das Kontrollsignal beim Anlegen und/oder Ändern der Daten einer Entität erzeugt, insbesondere bevor die Daten in der Datenbank gespeichert werden. Oder das Kontrollsignal wird beim Analysieren der Datenbank erzeugt. In jedem Fall können ausgehend von dem Kontrollsignal die zu speichernden Daten angepasst, etwa durch Verweise ersetzt werden. Oder bei Inkompatibilitäten, etwa aufgrund des vierten Datenbankzustands, können andere Daten verwendet oder der Vorgang abgebrochen werden. Es können auch lediglich Inkompatibilitäten vorab festgestellt werden.

Somit kann das Kontrollsignal sowohl beim Speichern, als auch beim Analysieren der Datenbank, für beispielsweise weitere Optimierungen, eingesetzt werden.

Vorzugsweise kann das erzeugte Kontrollsignal auch indikativ sein für mehrere gleichzeitig bestehende Datenbankzustände, soweit und sofern diese gleichzeitig bestehen. Beispielsweise kann ein vierter Datenbankzustand mit einem ersten, zweiten und/oder dritten Datenbankzustand auftreten.

In bevorzugten Ausführungsformen kann vorgesehen sein, dass das Kontrollsignal erzeugt wird, bevor und/oder während eine neue Entität, die mit der zumindest einen spezifischen ersten Steuergröße und/oder der zumindest einen zweiten Steuergröße assoziiert werden soll und mittels des Steuerbefehls auffindbar sein soll, in der Datenbank angelegt wird, und wobei vorzugsweise die Daten der neuen Entität, insbesondere die zumindest eine spezifische erste Steuergröße, die zumindest eine zweite Steuergröße, die Assoziierungen oder Kombinationen davon, zumindest teilweise den Daten einer in der Datenbank bestehenden Entität entsprechen und vorzugsweise diese Daten der bestehenden Entität zuvor aus der Datenbank abgerufen wurden; und/oder das Kontrollsignal erzeugt wird, bevor und/oder während die Daten einer bestimmten Entität der Vielzahl von Entitäten verarbeitet werden und/oder das Kontrollsignal erzeugt wird ohne Berücksichtigung wenigstens einer bestimmten Entität der Vielzahl von Entitäten, insbesondere derjenigen Entität, deren Daten verarbeitet werden, wobei in allen Fällen vorzugsweise die bestimmte Entität mit der wenigstens einen spezifischen ersten Steuergröße assoziiert und mittels des Steuerbefehls auffindbar ist.

Wenn das Kontrollsignal im Zusammenhang mit dem Anlegen einer neuen Entität in der Datenbank erzeugt wird, kann der Speichervorgang effizient ablaufen.

Gerade für den Fall, dass eine neue Entität basierend auf den Daten einer bereits bestehenden Entität angelegt werden soll, ist das Kontrollsignal ein wirkungsvolles Hilfsmittel zur effizienten Speicherorganisation. Denn so kann besonders effizient auf Steuergrößen der bestehenden Entität Bezug genommen werden.

Auch wenn für eine bestimmte Entität Daten verarbeitet werden, kann das Kontrollsignal dazu dienen, eine andere Entität festzustellen, und die Daten der beiden Entitäten abzugleichen. Anschließend kann der Speicher abhängig von dem Kontrollsignal beispielsweise neu organisiert werden, oder die Information über gleiche Steuergrößen anderweitig verwendet werden. Dabei ist es hilfreich, dass die Entität, deren Daten verarbeitet wird, nicht als mögliche Entität zur Bezugnahme ermittelt wird und deshalb ausgeschlossen werden kann.

In bevorzugten Ausführungsformen kann vorgesehen sein, dass das Kontrollsignal alle ersten Entitäten und/oder auch als zweite Entitäten auffindbare erste Entitäten identifiziert oder identifizierbar macht und/oder einen Datenstrom, der diese Entitäten identifiziert oder identifizierbar macht, aufweist; und/oder mit dem Steuerbefehl eine Mehrzahl an Entitäten auffindbar sind und mit diesen Entitäten eine Vielzahl an ersten Steuergrößen assoziiert sind, und jede erste Steuergröße davon als spezifische erste Steuergröße verwendet wird, um zusammen mit dem Steuerbefehl ein Kontrollsignal zu erzeugen, und wobei auf Basis der mehreren so erzeugten Kontrollsignale ein Super-Kontrollsignal erzeugt wird, anhand dessen identifizierbar ist, welche gleiche ersten Steuergrößen mit welchen der Mehrzahl an Entitäten assoziiert sind.

Indem das Kontrollsignal, oder ein von diesem aufgewiesenen Datenstrom, die zweiten Entitäten direkt zugänglich macht, kann das Verfahren besonders effizient ablaufen.

Es kann vorteilhaft sein, Entitäten, die sich mittels eines Steuerbefehls auffinden lassen zu analysieren. Dazu können einige (oder alle) der mit den auffindbaren Entitäten assoziierten ersten Steuergrößen ermittelt werden. Dann kann für jede dieser ersten Steuergrößen zusammen mit dem Steuerbefehl jeweils ein Kontrollsignal erzeugt werden. Jedes dieser Kontrollsignale kann beispielsweise die Entitäten identifizieren, die mit der ersten Steuergröße assoziiert sind. Mit allen Kontrollsignalen kann das Super-Kontrollsignal erzeugt werden. Mit diesem kann festgestellt werden, welche erste Steuergrößen mit welchen Entitäten assoziiert sind.

Das Super-Kontrollsignal kann explizit oder implizit auf den mehreren Kontrollsignalen basieren. Das heißt, das Super-Kontrollsignal kann erzeugt werden, indem die mehreren Kontroll-Signale alle einzeln explizit erzeugt werden und darauf basierend das Super-Kontrollsignal erzeugt wird. Das Super-Kontrollsignal kann auch erzeugt werden, indem die mehreren Kontroll-Signale nur implizit bei der Erzeugung des Super-Kontrollsignals einbezogen werden. Im letzteren Fall sind die einzelnen Kontrollsignale nicht oder nicht alle direkt bzw. unmittelbar zugänglich, bzw. werden nicht gesondert ausgeleitet oder betrachtet. Dadurch kann das Super-Kontrollsignal effizient erzeugt werden.

Vorzugsweise wird dabei nur jede einzigartige erste Steuergröße als spezifische erste Steuergröße verwendet. Wenn mehrere Entitäten mit den gleichen ersten Steuergrößen assoziiert sind, muss so nicht mehrmals das Kontrollsignal dafür erzeugt werden.

In bevorzugten Ausführungsformen kann vorgesehen sein, dass mit den mit den Entitäten assoziierten ersten Steuergröße jeweils eine Ausgabedarstellung assoziiert ist, und wobei vorzugsweise das Verfahren ferner aufweist, die Ausgabedarstellung der zumindest einen spezifischen ersten Steuergröße, vorzugsweise die Ausgabedarstellungen aller, insbesondere mit einer vorgegebenen oder vorgebbaren dritten Steuergröße assoziierten, ersten Steuergrößen, die mit der wenigstens einen auffindbaren zweiten Entität, vorzugsweise mit mehreren oder aller der auffindbaren zweiten Entitäten, und/oder mit den mittels des Steuerbefehls auffindbaren Entitäten assoziiert sind, auszugeben, wobei die Ausgabe vorzugsweise (i) gruppiert nach Entitäten, (ii) auf einer Mensch-Maschine-Schnittstelle, wie etwa einen Monitor, und/oder (iii) in einem maschinenlesbaren Format, wie etwa eine XML-Darstellung, erfolgt.

Durch die Ausgabedarstellung kann die erste Steuergröße in unterschiedlichen Formen bereitgestellt werden. Dies ist besonders vorteilhaft, wenn die Informationen über die ersten Steuergrößen anderswo verarbeitet und dazu an andere Systeme weitergegeben werden sollen. Je nach Ziel kann ein geeignetes Format der ersten Steuergrößen durch die Festlegung einer entsprechenden Ausgabedarstellung definiert werden.

Beispielsweise kann eine erste Steuergröße eine Zeichenkette aufweisen. Es ist dann vorteilhaft möglich, für ein anderes System eine andere Form zu wählen, also anstatt die Zeichenkette die jeweilige Ausgabedarstellung der ersten Steuergröße. Dann kann beispielsweise die erste Steuergröße in einer strukturierten Form bereitgestellt werden. Beispielsweise kann eine Ausgabedarstellung eine XML-Struktur aufweisen, die die Daten der ersten Steuergröße aufweist. Eine Ausgabedarstellung kann auch eine textbasierte und/oder tabellenartige Darstellung der ersten Steuergröße aufweisen. Wenn der Wert einer ersten Steuergröße einen Parameter und ihm zugewiesenen Wert aufweist kann beispielsweise eine tabellenartige Darstellung pro Zeile den Parameter und seinen Wert in jeweils zwei Spalten wiedergeben. Eine Ausgabedarstellung kann aber auch eine visuelle Wiedergabe der ersten Steuergröße aufweisen, etwa in Form einer 2D- oder 3D-Darstellung der ersten Steuergröße.

Eine visuelle Wiedergabe der ersten Steuergröße ist besonders vorteilhaft, da so ein Betrachter, wie etwa ein Systemadministrator, darin unterstützt werden kann, den Datenbankinhalt zu analysieren und hinsichtlich der Effizienz zu optimieren und/oder die durch ein anderes System durchgeführte Analyse zu überwachen und bei Fehlern eingreifen zu können.

Beispielsweise kann eine Entität ein Fahrzeugprojekt darstellen, das in der Datenbank verwaltet werden soll. Erste Steuergrößen können dann Komponenten des Fahrzeugs repräsentieren. Indem nun die wenigstens eine erste (oder sogar alle ersten) Steuergrößen mit einer entsprechenden Ausgabedarstellung assoziiert ist (bzw. sind), kann besonders einfach dargestellt werden, in Bezug auf welche Datenbankstrukturen bzw. darin gespeicherten Inhalte, Abhängigkeiten bestehen, Probleme auftreten und/oder Optimierungen durchgeführt werden können.

Wenn die zweite Steuergrößen mit dritten Steuergrößen assoziiert sind, können die Ausgabedarstellungen auf bestimmte zweite Steuergrößen eingegrenzt werden. Dadurch kann die Verarbeitung der Daten von nicht relevanten zweiten Steuergrößen vermieden werden. Dies ermöglicht ein besonders effizientes Verfahren.

Damit kann der Datenbankzustand besonders wirkungsvoll nach außen gekehrt werden und so dem Betrachter oder einem anderen technischen System zugänglich gemacht werden. Der Betrachter und/oder das System kann daraufhin weitere Vorkehrungen treffen und/oder unterstützt durch die Ausgabedarstellung die Datenbank optimieren.

In bevorzugten Ausführungsformen kann vorgesehen sein, dass für jede Entität anhand zumindest einer der mit ihr assoziierten zweiten Steuergrößen bestimmt wird oder werden kann, wo in Bezug auf ein Referenzobjekt die Ausgabedarstellungen der mit der Entität assoziierten ersten Steuergrößen jeweils ausgegeben wird. Sowohl das Referenzobjekt als auch die Ausgabedarstellungen können dann gemeinsam und entsprechend platziert ausgegeben werden, insbesondere auf einer Mensch-Maschine-Schnittstelle.

Beispielsweise kann das Referenzobjekt eine Weltkarte oder ein Teil davon sein. Dann kann beispielsweise jede Entität mit einer zweiten Steuergröße assoziiert sein, die das Zugehörigkeitsland der Entität angibt. Dann können die Ausgabedarstellungen der einzelnen mit einer Entität assoziierten ersten Steuergrößen auf der Weltkarte bei jeweils dem Land platzieren werden, zu dem die jeweilige Entität zugewiesen ist. Dies ermöglicht eine besonders übersichtliche Darstellung des Datenbankzustandes.

In bevorzugten Ausführungsformen kann vorgesehen sein, dass das Verfahren ferner aufweist: Beeinflussen der Ausgabedarstellung der einzelnen ersten Steuergröße in Abhängigkeit der jeweiligen Kontrollsignale, insbesondere des Super-Kontrollsignals, wobei das Beeinflussen vorzugsweise aufweist, dass die Ausgabedarstellung in Bezug auf wenigstens einen Parameter, wie ihr Ausgabeformat, ihre Größe, ihre Form, ihre Farbe, ihre Füllung, und/oder ihre Textur, zumindest bereichsweise in Abhängigkeit des Kontrollsignals angepasst wird, insbesondere dass die Ausgabedarstellung von gleichen ersten Steuergrößen entitätsübergreifend gleich beeinflusst wird.

Wenn die Ausgabedarstellung abhängig von dem Kontrollsignal beeinflusst wird, kann einem anderen technischen System und/oder einem Betrachter besonders effizient Information in Bezug auf möglicherweise kritische Steuergrößen oder auf Steuergrößen, die aufgrund des Datenbankzustandes möglicherweise besondere Aufmerksamkeit erfordern können, bereitgestellt werden. Dadurch ist es besonders effizient möglich, die interne Struktur der Datenbank und der darin organisierten Daten nach außen zu kehren, umgeeignet auf Datenbankzustände reagieren zu können.

Wenn die Ausgabedarstellung in Abhängigkeit des konkreten Datenbankzustandes beeinflusst wird, ist eine feingranulare Überwachung der Datenbank und ihres Inhalts möglich.

Vorzugsweise kann die Ausgabedarstellung auch Informationen aufweisen, wie sie relativ zu wenigstens einer anderen Ausgabedarstellung in einem ein-, zwei- oder dreidimensionalen Darstellungsraum anzuordnen ist. Damit ist es möglich, den Zustand der Datenbank mit mehr Details an andere technische Systeme weiterzuleiten. Beispielsweise kann so die Reihenfolge der Ausgabe bestimmt werden. Dies kann sinnvoll sein, wenn bestimmte Abhängigkeiten in den Ausgabedarstellungen bestehen und daher von einem verarbeitenden System bestimmte Ausgabedarstellungen vor anderen Ausgabedarstellungen verarbeitet werden sollen oder müssen.

In bevorzugten Ausführungsformen kann vorgesehen sein, dass zumindest einige der Daten der Vielzahl von Entitäten, insbesondere die ersten Steuergrößen, die zweiten Steuergrößen, die dritten Steuergrößen, die Kontrollgrößen und/oder die Assoziierungen, in einer gemeinsamen Datenstruktur und/oder in einer für jede Entität eigenen Datenstrukturen gespeichert werden, wobei eine entsprechende Datenstruktur vorzugsweise eine temporäre Datenstruktur umfasst oder darstellt und/oder in der Datenbank gespeichert wird oder darin speicherbar ist, und wobei vorzugsweise das Kontrollsignal durch Berücksichtigung der in der bzw. in den Datenstruktur(en) gespeicherten Daten erzeugt wird, insbesondere die in der bzw. den Datenstruktur(en) gespeicherten Daten dazu entsprechend ausgelesen und/oder verarbeitet werden.

Mittels der Datenstruktur können die Daten der Entitäten besonders effizient verwaltet werden. Beispielsweise können die Daten wie Steuergrößen und Kontrollgrößen sowie Assoziierungen, auch zusammen mit weiteren Daten der Entität darin gespeichert werden. Damit können vorzugsweise die Steuergrößen, die Kontrollgrößen und/oder die Assoziierungen in der Datenstruktur als Daten wirken, welche den Zugriff auf die Datenstruktur und damit auf die zu einer Entität gespeicherten Daten steuern und/oder kontrolliert.

Damit weist die Datenstruktur vorzugsweise Daten auf, die der Steuerung des Betriebs einer Vorrichtung, die die Daten verarbeitet, dienen kann. Solche Daten sind durch die Steuergrößen, die Kontrollgrößen und/oder die Assoziierungen dargestellt. Denn durch sie wird das Kontrollsignal bestimmt und damit ein Zugriff auf die Daten der Entität steuerbar gemacht.

Außerdem kann die Datenstruktur vorzugsweise auch Daten aufweisen, deren Inhalt und Bedeutung beispielsweise nur für menschliche Nutzer relevant sind. Solche kognitiven Daten können damit mittels der funktionellen Daten aufgefunden und besonders effizient abgefragt und verarbeitet werden.

Als temporäre Datenstruktur kann beispielsweise eine Datenstruktur verstanden werden, welche nur für eine oder mehrere Datenbank-Abfrage vorübergehend vorgehalten und/oder verwendet wird. Beispielsweise könnte die temporäre Datenstruktur auch nur in einem flüchtigen Speicher vorgehalten und/oder im Rahmen der Datenverarbeitung in einem Zwischenschritt zeitweise erzeugt und/oder eingesetzt sein oder werden.

In bevorzugten Ausführungsformen kann vorgesehen sein, dass das Verfahren ferner aufweist: Empfangen, Abrufen, insbesondere aus der Datenbank, Verarbeiten und/oder Vorgeben der zumindest einen ersten Steuergröße; Empfangen, Abrufen, insbesondere aus der Datenbank, und/oder Verarbeiten der zumindest einen zweiten Steuergröße und/oder Erzeugen des Steuerbefehls basierend auf den zweiten Steuergrößen; Empfangen, Abrufen, insbesondere aus der Datenbank, und/oder Verarbeiten der zumindest einen dritten Steuergröße; Empfangen, Abrufen, insbesondere aus der Datenbank, und/oder Verarbeiten der zumindest einen Kontrollgröße; und/oder Kontrollieren der Datenbank und/oder zumindest eines anderen technischen Systems, wie etwa eine andere Datenbank, eine Mensch-Maschine-Schnittstelle, ein Softwaremodul und/oder ein Hardwaremodul, basierend auf dem Kontrollsignal.

Die ersten Steuergrößen, die zweiten Steuergrößen, die dritten Steuergrößen und/oder die Kontrollgrößen können beispielsweise als Benutzereingabe empfangen werden und/oder aus der Datenbank oder von einem anderen Ort abgerufen werden.

Das Kontrollsignal kann besonders wirkungsvoll dazu eingesetzt werden, einen Speichervorgang in der Datenbank zu überwachen, vorzubereiten und/oder auszuführen. Auch eine andere Datenbank als technisches System, etwa eine Backup-Datenbank, kann auf Grundlage des Kontrollsignals kontrolliert werden, um etwa einen Speichervorgang in der anderen Datenbank zu überwachen, vorzubereiten und/oder auszuführen.

Auch die Ausgabe der Ausgabedarstellung kann auf Grundlage des Kontrollsignals kontrolliert werden. Dies ist insbesondere vorteilhaft, wenn eine Mensch-Maschine-Schnittstelle wie ein Monitor als das technische System kontrolliert wird. Dann können Ausgabedarstellungen auf einem Monitor kontrolliert werden.

Vorzugsweise können die Assoziierungen zwischen Entitäten mit eigenen Ausgabedarstellung zusammen mit den Ausgabedarstellungen der ersten Steuergrößen gleichermaßen ausgegeben werden.

Die Aufgabe wird gemäß einem zweiten Aspekt der Erfindung dadurch gelöst, dass eine Vorrichtung zur Datenverarbeitung, wie insbesondere einen Computer, die dazu eingerichtet ist, ein Verfahren gemäß dem ersten Aspekt der Erfindung auszuführen, wobei die Vorrichtung vorzugsweise zumindest eine Datenbank und/oder zumindest eine Datenstruktur aufweist vorgeschlagen wird.

Indem eine Vorrichtung das Verfahren entsprechend ausführt, können die Vorteile des Verfahrens effizient und komfortabel genutzt werden, insbesondere um auf die Datenbank einzuwirken, welche von der Vorrichtung aufgewiesen sein kann.

Vorzugsweise weist die Vorrichtung einen Prozessor und/oder einen Speicher auf. Der Prozessor kann beispielsweise eingerichtet sein, das Verfahren auszuführen. Der Speicher kann beispielsweise die Datenbank aufweisen. Die Datenbank kann beispielsweise die Datenstruktur aufweisen. Die Vorrichtung kann auch Schnittstellen aufweisen, mit denen das erzeugte Kontrollsignal an ein oder mehrere andere technische Systeme geleitet werden kann. Beispielsweise können damit diese technischen Systeme kontrolliert werden, insbesondere beeinflusst, geregelt, gesteuert und/oder zur Ausgabe von Daten verwendet werden.

Ein technisches System kann beispielsweise eine (andere oder die eigene) Datenbank, ein Informationssystem und/oder ein (anderer oder der eigene) Prozessor sein. Auch eine Mensch-Maschine-Schnittstelle ist ein bevorzugtes technisches System, das auf Grundlage des Kontrollsignals kontrolliert werden kann.

Weitere Merkmale und Vorteile der Erfindung ergeben sich aus der nachfolgenden Beschreibung, in der bevorzugte Ausführungsformen der Erfindung anhand schematischer Zeichnungen erläutert werden.

Dabei zeigen:
- Fig. 1: eine Vorrichtung zur Datenverarbeitung gemäß dem zweiten Aspekt der Erfindung;
- Fig. 2: Datensätze aufweisend Daten zu Entitäten;

- Fig. 3: eine Eingabemaske zum Befüllen mit Werten von Steuergrößen einer neuen Entität;
- Fig. 4a: Ausgabedarstellungen von ersten Steuergrößen in einer ersten Variante;
- Fig. 4b: Ausgabedarstellungen von ersten Steuergrößen in einer zweiten Variante; und
- Fig. 4c: Ausgabedarstellungen von ersten Steuergrößen in einer dritten Variante.

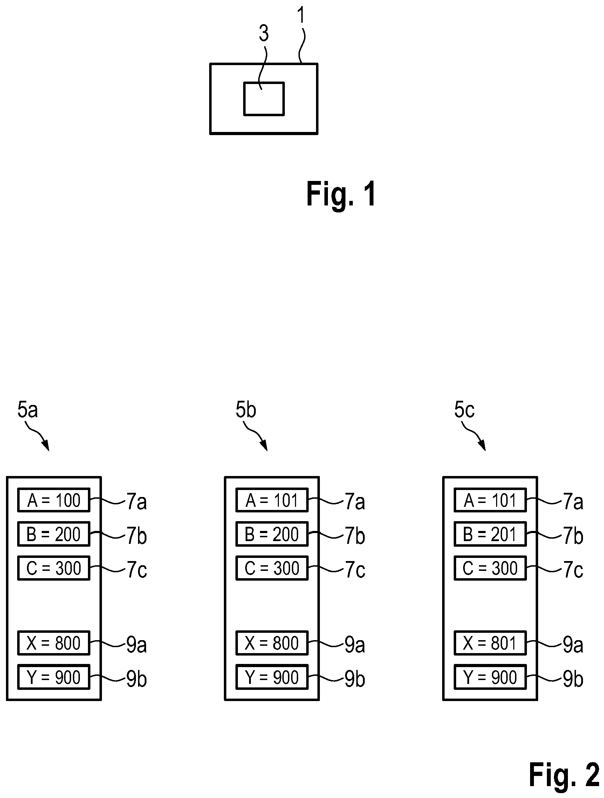

Fig. 1 zeigt eine Vorrichtung zur Datenverarbeitung 1, die dazu eingerichtet ist, ein Verfahren gemäß dem ersten Aspekt der Erfindung auszuführen. Die Vorrichtung 1 weist eine Datenbank 3 auf.

Fig. 2 zeigt in der Datenbank 3 gespeicherte Datensätze 5a...5c zu entsprechenden Entitäten. Jeder Datensatz 5a... 5c weist die in der Datenbank 3 zu einer Entität gespeicherten Daten auf.

Mit jeder Entität sind drei erste Steuergrößen 7a...7c und zwei zweite Steuergrößen 9a und 9b assoziiert, mithin von dem jeweiligen Datensatz 5a...5c aufgewiesen. Es ist insoweit gleichbedeutend zu sagen, dass eine Entität mit einer Steuergröße assoziiert ist und dass der Datensatz der Entität die Steuergröße aufweist. Außerdem wird zum Zwecke der einfacheren Erläuterung eine Entität synonym mit ihrem Datensatz verwendet. Mit der Entität 5a ist dann beispielsweise die Entität gemeint, deren Daten in dem Datensatz 5a gespeichert sind.

Mit der Entität 5a sind eine erste Steuergröße 7a, welche dem Parameter "A" den Wert "100" zuweist, eine erste Steuergröße 7b, welche dem Parameter "B" den Wert "200" zuweist, und eine erste Steuergröße 7c, welche dem Parameter "C" den Wert "300" zuweist, assoziiert.

Mit der Entität 5a sind außerdem eine zweite Steuergröße 9a, welche dem Parameter "X" den Wert "800" zuweist, und eine zweite Steuergröße 9b, welche dem Parameter "Y" den Wert "900" zuweist, assoziiert.

Die mit der Entität 5b assoziierten Daten weichen von denen der Entität 5a dadurch ab, dass die erste Steuergröße 7a der Entität 5b dem Parameter "A" den Wert "101" zuweist.

Die mit der Entität 5c assoziierten Daten weichen von denen der Entität 5b dadurch ab, dass die erste Steuergröße 7b der Entität 5c dem Parameter "B" den Wert "201" zuweist und dass die zweite Steuergröße 9a der Entität 5c dem Parameter "X" den Wert "801" zuweist.

Wenngleich vorliegend eine gleiche Anzahl an erster Steuergrößen mit jeder der Entitäten 5a... 5c assoziiert ist, könnten mit den einzelnen Entitäten 5a...5c auch zumindest zum Teil unterschiedlich viele erste Steuergrößen assoziiert sein. Entsprechend könnten mit den einzelnen Entitäten 5a...5c auch unterschiedlich viele zweite Steuergrößen assoziiert sein, wenngleich es vorliegend für jede Entität 5a...5c zwei sind. Auch weitere Daten können grundsätzlich in den Datensätzen 5a...5c hinterlegt sein, wenngleich diese in Fig. 2 nicht dargestellt sind.

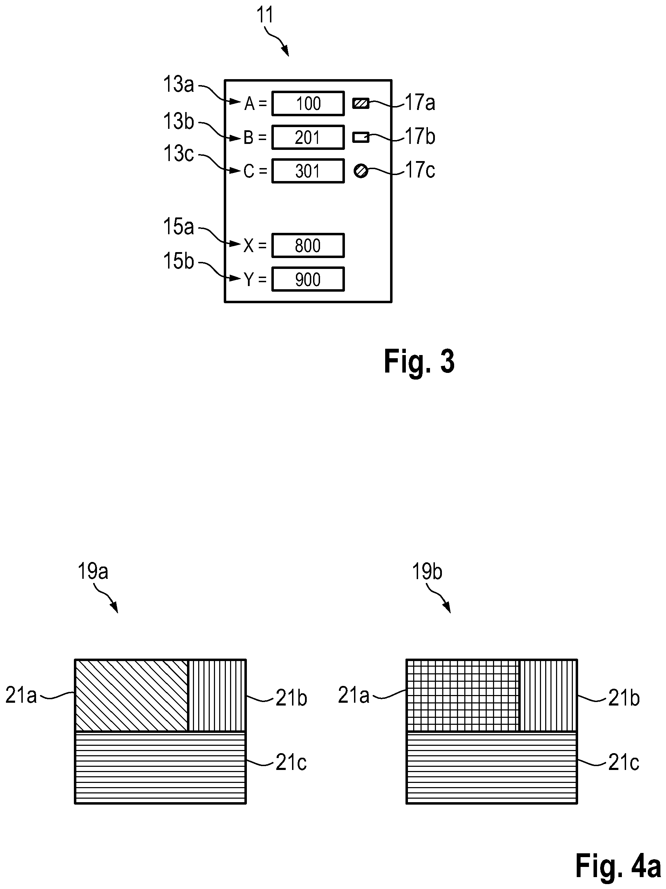

Fig. 3 zeigt eine Eingabemaske 11, die einem Benutzer bereitgestellt werden kann, um einen neuen Datensatz, und damit eine neue Entität, in der Datenbank anzulegen.

Die Eingabemaske fragt die Daten für die zuvor in Bezug auf Fig. 2 beschriebenen drei ersten Steuergrößen und zwei zweiten Steuergrößen ab. Gemäß der in Fig. 3 dargestellten Befüllung der Eingabemaske 11, soll die neue Entität mit einer ersten Steuergröße 13a, die dem Parameter "A" den Wert "100" zuweist, einer ersten Steuergröße 13b, die dem Parameter "B" den Wert "200" zuweist, einer ersten Steuergröße 13c, die dem Parameter "C" den Wert "301" zuweist, einer zweiten Steuergröße 15a, die dem Parameter "X" den Wert "800" zuweist, und einer zweiten Steuergröße 15b, die dem Parameter "Y" den Wert "900" zuweist, assoziiert werden.

Das erfindungsgemäße Verfahren und seine Ausführungsformen kann nun vorteilhaft dazu genutzt werden, für jede abzuspeichernden erste Steuergröße 13a... 13c ein Kontrollsignal zu erzeugen, das für den Datenbankzustand in Bezug auf die jeweilige erste Steuergröße 13a... 13c indikativ ist.

Dazu wird ein Steuerbefehl erzeugt, das auf den beiden zweiten Steuergrößen basiert, also vorliegend auf "X=800" und "Y=900". Wenngleich vorliegend die zweiten Steuergrößen auch in der Eingabemaske 11 definiert werden, können in anderen Ausführungsformen die zweiten Steuergrößen ganz oder teilweise anderweitig vorgegeben bzw. definiert werden und/oder an anderer Stelle vorgegeben bzw. definiert werden.

Für das erste Kontrollsignal in Bezug auf die mit der neuen Entität zu assoziierende erste Steuergröße 13a ermittelt das Verfahren alle in der Datenbank 3 gespeicherten Entitäten, welche mit der spezifischen ersten Steuergröße "A=100" entsprechend der für die neue Entität vorgesehene erste Steuergröße 13a assoziiert sind. Vorliegend ist (nur) für die Entität 5a die erste Steuergröße 7a ebenfalls "A=100". Damit ist (nur) die Entität 5a eine erste Entität. Die Entität 5a ist auch über den Steuerbefehl auffindbar, da sie ebenfalls die zweiten Steuergrößen 9a und 9b mit den Werten "X=800" bzw. "Y=900" assoziiert ist. Die Entität 5a ist damit (auch) eine zweite Entität. Natürlich muss das Ermitteln der ersten und zweiten Entitäten grundsätzlich nicht stufenweise ablaufen, sondern kann auch auf andere Weise, etwa in einem gemeinsamen Ablauf, erfolgen, die geeignet ist, das gewünschte Kontrollsignal zu erzeugen. Es ist jedoch aus Gründen der anschaulicheren Erläuterung hier vorzuziehen, dies stufenweise darzustellen.

Das erzeugte erste Kontrollsignal ist daher indikativ für einen ersten Datenbankzustand.

Anhand des erzeugten ersten Kontrollsignals kann ein technisches System gesteuert werden, das beispielsweise im Hintergrund bereits Maßnahmen zur Vorbereitung des Speichervorgangs durchführt. Alternativ oder ergänzend kann anhand des erzeugten ersten Kontrollsignals der erste Datenbankzustand in Bezug auf die erste Steuergröße 13a beispielsweise in der Eingabemaske 11 durch ein Symbol 17a, etwa in Form eines ausgefüllten Rechtecks, angezeigt werden.

Für das zweite Kontrollsignal in Bezug auf die mit der neuen Entität zu assoziierende erste Steuergröße 13b ermittelt das Verfahren alle in der Datenbank 3 gespeicherten Entitäten, welche mit der spezifischen ersten Steuergröße "B=201" entsprechend der für die neue Entität vorgesehene erste Steuergröße 13b assoziiert sind. Vorliegend ist (nur) für die Entität 5c die erste Steuergröße 7b ebenfalls "B=201". Damit ist (nur) die Entität 5c eine erste Entität. Die Entität 5c ist allerdings nicht über den Steuerbefehl auffindbar, da sie nicht mit einer zweiten Steuergrößen mit dem Wert "X=800" assoziiert ist, wie es die zweite Steuergröße 15a und damit der mitunter auf ihr basierende Steuerbefehl erfordert. Lediglich die zweite Steuergröße 9b der Entität 5c weist den Wert "Y=900" auf. Die Entität 5a ist damit keine zweite Entität.

Das erzeugte zweite Kontrollsignal ist daher indikativ für einen zweiten Datenbankzustand.

Anhand des erzeugten zweiten Kontrollsignals kann ein technisches System gesteuert werden, das beispielsweise im Hintergrund bereits Maßnahmen zur Vorbereitung des Speichervorgangs durchführt. Alternativ oder ergänzend kann anhand des erzeugten zweiten Kontrollsignals der zweite Datenbankzustand in Bezug auf die erste Steuergröße 13b beispielsweise in der Eingabemaske 11 durch ein Symbol 17b, etwa in Form eines Rechtecks, angezeigt werden.

Für das dritte Kontrollsignal in Bezug auf die mit der neuen Entität zu assoziierende erste Steuergröße 13c ermittelt das Verfahren alle in der Datenbank 3 gespeicherten Entitäten, welche mit der spezifischen ersten Steuergröße "C=301" entsprechend der für die neue Entität vorgesehene erste Steuergröße 13c assoziiert sind. Vorliegend ist keine der Entitäten mit einer ersten Steuergröße mit dem Wert "C=301" assoziiert. Damit gibt es keine erste Entitäten in der Datenbank 3.

Das erzeugte dritte Kontrollsignal ist daher indikativ für einen dritten Datenbankzustand.

Anhand des erzeugten dritten Kontrollsignals kann ein technisches System gesteuert werden, das beispielsweise im Hintergrund bereits Maßnahmen zur Vorbereitung des Speichervorgangs durchführt. Alternativ oder ergänzend kann anhand des erzeugten dritten Kontrollsignals der dritte Datenbankzustand in Bezug auf die erste Steuergröße 13c beispielsweise in der Eingabemaske 11 durch ein Symbol 17c, etwa in Form eines ausgefüllten Kreises, angezeigt werden.

In den beschriebenen Situationen können anhand des erzeugten Kontrollsignals alternativ oder ergänzend zur Darstellung eines Symbols 17a... 17c auch andere Maßnahmen ergriffen werden, wenn der durch das Kontrollsignal jeweils indikative Datenbankzustand dies erfordert. Je nach Datenbankzustand kann generell alternativ oder ergänzend auch ein Anlegen der neuen Entität verhindert werden, um so etwa unzulässige Datenbankeingaben zu verhindern. So kann beispielsweise bei einem dritten Datenbankzustand in Bezug auf eine erste Steuergröße ein Anlegen der neuen Entität verhindert werden, so dass für neue Entitäten nur bereits bestehende erste Steuergrößen verwendet werden dürfen.

Das Erzeugen des Kontrollsignals wurde in Bezug auf Fig. 3 anhand einer Situation beschrieben, bei der der Speichervorgang, soweit er ausgelöst wird, noch bevorsteht.

Wenn nach Befüllen der Eingabemaske 11 die neue Entität mit den Werten der Steuergrößen 13a... 13d und 15a... 15b in der Datenbank 3 angelegt wird, kann das erfindungsgemäße Verfahren und seine Ausführungsformen alternativ oder ergänzend dazu eingesetzt werden, ein oder mehrere Kontrollsignale zu erzeugen, um beispielsweise den Speichervorgang zu organisieren. Dies kann gleichermaßen wie oben in Bezug auf Fig. 3 beschrieben erfolgen. Es ist natürlich auch möglich, die Kontrollsignale lediglich beim Speichern zu erzeugen, nicht jedoch auch im Vorfeld beim Befüllen der Eingabemaske 11.

Im Rahmen des Speichervorgangs werden die ersten und zweiten Steuergrößen 13a... 13c und 15a... 15b zu entsprechenden ersten und zweiten Steuergrößen 7a...7c bzw. 9a...9b des neuen Datensatzes der neu angelegten Entität. Insoweit dient die unterschiedliche Bezeichnung von ersten Steuergrößen mit 7a...7c und 13a...13c bzw. die unterschiedliche Bezeichnung von zweiten Steuergrößen mit 9a...9b und 15a...15b nur dazu, die in der Datenbank 3 bereits bestehenden Steuergrößen 7a...7c und 9a...9b von den neu zu speichernden Steuergrößen 13a... 13c und 15a... 15b einfacher unterscheiden zu können.

Alternativ oder ergänzend zu den oben dargestellten Möglichkeiten, kann das erfindungsgemäße Verfahren und seine Ausführungsformen auch dazu eingesetzt werden, eine Repräsentierung der Datenbank bzw. ihres Zustandes zu erhalten. Darauf basierend können Planungen stattfinden, oder Optimierungen der Datenbank erfolgen.

Das Verfahren ermöglicht es in einer Ausführungsform beispielsweise, für ausgewählte Entitäten zu ermitteln, welche gleiche ersten Steuergrößen mit welchen der ausgewählten Entitäten assoziiert sind.

Dazu kann mit jeder der mit den Entitäten 5a...5c assoziierten ersten Steuergrößen 7a... 7c eine Ausgabedarstellung assoziiert sein. Diese kann beispielsweise ebenfalls in der Datenbank 3 und/oder in dem jeweiligen Datensatz 5a...5c der Entität gespeichert werden.

Es kann ein Steuerbefehl definiert oder vorgegeben werden, unter dem die ausgewählten Entitäten in der Datenbank auffindbar sind. Für jede erste Steuergröße, die mit diesen auffindbaren Entitäten assoziiert ist, kann dann ein Kontrollsignal erzeugt werden, wobei die erste Steuergröße dabei jeweils als spezifische erste Steuergröße zusammen mit besagtem Steuerbefehl verwendet wird. Das Erzeugen des Kontrollsignals erfolgt dabei in ganz ähnlicher Weise wie bereits oben unter andere in Bezug auf Fig. 3 beschrieben wurde.

Jedes so erzeugte Kontrollsignal macht diejenigen Entitäten unter den ausgewählten Entitäten identifizierbar (oder weist einen entsprechenden Datenstrom auf), die mit der jeweiligen spezifischen ersten Steuergröße assoziiert sind. Auf Basis aller dieser Kontrollsignale kann ein Super-Kontrollsignal erzeugt werden, anhand dessen identifizierbar ist, welche gleiche ersten Steuergrößen mit welchen der ausgewählten Entitäten assoziiert sind.

Darauf basierend kann die Ausgabedarstellung aller erster Steuergrößen, die mit den mittels des Steuerbefehls auffindbaren Entitäten assoziiert sind, ausgegeben werden.

Für beispielsweise den Steuerbefehl, der auf Basis der vorgegebenen zweiten Steuergrößen "X=800" und "Y=900" erzeugt wird, sind die beiden Entitäten 5a und 5b in der Datenbank auffindbar, da diese mit entsprechenden zweiten Steuergrößen 9a und 9b assoziiert sind.

Fig. 4a zeigt die Ausgaben 19a und 19b, die, gruppiert nach den Entitäten 5a und 5b, jeweils die Ausgabedarstellungen 21a...21c der mit den Entitäten assoziierten ersten Steuergrößen 7a... 7c darstellen. Das heißt, die erste Steuergröße 7a, 7b und 7c ist jeweils mit der Ausgabedarstellung 21a, 21b bzw. 21c assoziiert.

Die Ausgabedarstellung 21a...21c der einzelnen ersten Steuergrößen 7a... 7c wird dabei in Abhängigkeit des Super-Kontrollsignals beeinflusst. Dadurch ist die Ausgabedarstellung 21a...21c jeweils in Bezug auf ihre Größe und Füllung angepasst. Vor allem wird die Ausgabedarstellung 21a...21c von gleichen ersten Steuergrößen 7a... 7c entitätsübergreifend gleich beeinflusst.

Da die Ausgaben 19a und 19b in Fig. 4a für die Steuergröße 7b gleiche Ausgabedarstellungen 21b aufweisen ist erkennbar, dass die erste Steuergröße 7b für beide Entitäten 5a und 5c gleich ist. Die gleiche Ausgabedarstellung 21c für die beiden Ausgaben 19a und 19b zeigt auch die Gleichheit der zweiten Steuergröße 7c für die beiden Entitäten 5a und 5c an. Die unterschiedliche Füllung der Ausgabedarstellungen 21a in den beiden Ausgaben 19a und 19b kennzeichnet unterschiedliche erste Steuergrößen 7a für die beiden Entitäten 5a und 5c.

Für beispielsweide den Steuerbefehl, der, abweichend zu dem vorherigen Beispiel, nur auf Basis der zweiten Steuergröße "Y=900" erzeugt wird, sind die drei Entitäten 5a, 5b und 5c in der Datenbank auffindbar, da diese mit der entsprechenden zweiten Steuergrößen 9b assoziiert sind.

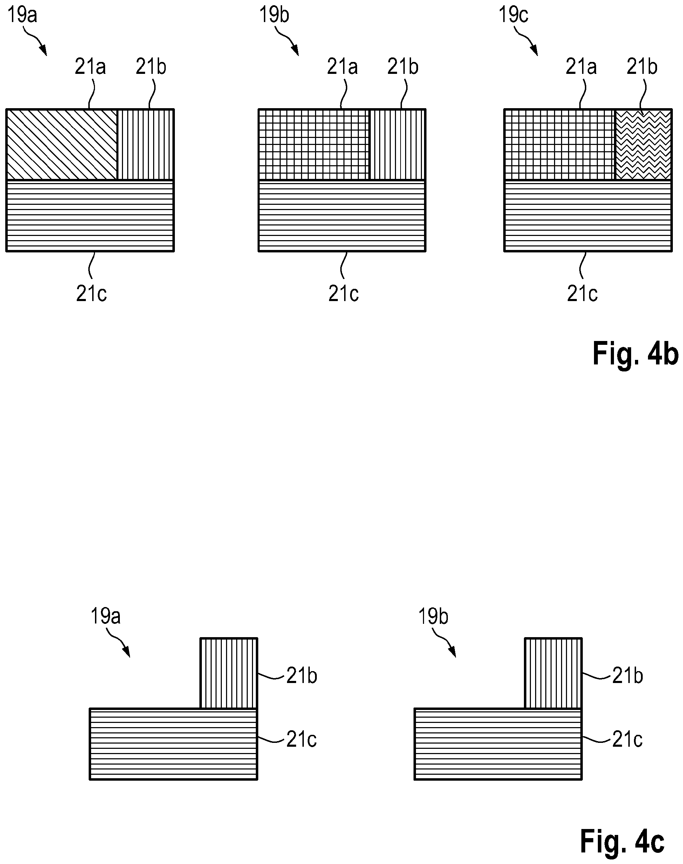

Fig. 4b zeigt die Ausgaben 19a... 19c, die, gruppiert nach den Entitäten 5a...5c, jeweils die Ausgabedarstellungen 21a...21c der mit den Entitäten assoziierten ersten Steuergrößen 7a... 7c darstellen. Das heißt, die erste Steuergröße 7a, 7b und 7c ist jeweils mit der Ausgabedarstellung 21a, 21b bzw. 21c assoziiert.

Anhand gleicher Ausgabedarstellungen können entitätsübergreifend wieder die gleichen ersten Steuergrößen erkannt werden. Anhand der unterschiedlichen Füllung für die Ausgabedarstellung 21b kann beispielsweise erkannt werden, dass die erste Steuergröße 7b für die Entität 5c (Ausgabe 19c) unterschiedlich ist zu der ersten Steuergröße 7b der Entitäten 5a und 5b (Ausgabe 19a bzw. 19b).

In bevorzugten Ausführungsformen könnte für jede der Entitäten 5a...5c die erste Steuergröße 7a mit einer gleichen ersten dritten Steuergröße und die ersten Steuergrößen 7b und 7c mit einer gleichen zweiten dritten Steuergröße assoziiert sein.

Es kann darauf basierend bevorzugt nur die Ausgabedarstellung aller mit einer vorgegebenen dritten Steuergröße assoziierten erster Steuergrößen, die mit den mittels des Steuerbefehls auffindbaren Entitäten assoziiert sind, ausgegeben werden.

Oder mit anderen Worten ausgedrückt, es können anhand der dritten Steuergrößen die Darstellungen 19a..19c der Figuren 4a und 4b erweitert oder reduziert werden. Dadurch kann das Verfahren besonders dateneffizient ausgeführt werden.

Wenn beispielsweise für die mittels des Steuerbefehls auffindbaren Entitäten nur die mit der zweiten dritten Steuergröße assoziierten ersten Steuergrößen ausgegeben werden sollen, könnte das zu Fig. 4a beschriebene Szenario zu den beiden Ausgaben 19a und 19b wie sie in Fig. 4c zu sehen sind führen. Da nur die ersten Steuergrößen 7b und 7c mit der zweiten dritten Steuergröße assoziiert sind, werden auch nur deren Ausgabedarstellungen 21b und 21c ausgegeben.

Die unterschiedlichen Ausgaben 19a... 19c in den Figs. 4a bis 4c sind nur ein anschauliches Beispiel für bevorzugte Ausgabedarstellungen, anhand derer sich zudem die Funktionsweise des erfindungsgemäßen Verfahrens und seinen Ausführungsformen gut erläutern lässt. In anderen Ausführungsformen kann die Ausgabedarstellung daher vorzugsweise andere Formen annehmen, insbesondere derart, um einem anderen technischen System basierend auf dem Super-Kontrollsignal die Möglichkeit zu geben, Maßnahmen zu ergreifen. Dazu kann die Ausgabe in anderen Ausführungsformen beispielsweise in einem strukturierten Datenformat erfolgen, womit ein System umfangreiche Informationen über den inneren Datenbankzustand erhält.

### Bezugszeichenliste

- 1: Vorrichtung zur Datenverarbeitung
- 3: Datenbank
- 5a, 5b, 5c: Datensatz
- 7a, 7b 7c: Erste Steuergröße
- 9a, 9b: Zweite Steuergröße
- 11: Eingabemaske
- 13a, 13b, 13c: Erste Steuergröße
- 15a, 15b: Zweite Steuergröße
- 17a, 17b, 17c: Symbol
- 19a, 19b, 19c: Ausgabe
- 21a, 21b, 21c: Ausgabedarstellung

## Patentansprüche

1. Verfahren zum Verwalten von Daten von einer Vielzahl von Entitäten in zumindest einer Datenbank (3), das Verfahren aufweisend:
Erzeugen zumindest eines für zumindest einen Datenbankzustand indikativen Kontrollsignals in Abhängigkeit der Auffindbarkeit wenigstens einer ersten Entität unter der Vielzahl von Entitäten in der Datenbank, wobei zumindest eine spezifische erste Steuergröße (7a-7c) mit jeder der wenigstens einen ersten Entität in der Datenbank assoziiert ist, und in Abhängigkeit der Auffindbarkeit wenigstens einer der wenigstens einen ersten Entität als zweite Entität unter der Vielzahl von Entitäten in der Datenbank mittels eines Steuerbefehls.

2. Verfahren nach Anspruch 1, wobei
der Steuerbefehl zumindest eine, insbesondere vorgegebene oder vorgebbare, zweite Steuergröße (9a, 9b) aufweist und/oder auf ihr basiert;
die zumindest eine spezifische erste Steuergröße mit zumindest einer dritten Steuergröße assoziiert ist;
eine Vielzahl von ersten Steuergrößen mit jeder der ersten Entitäten assoziiert ist und die ersten Steuergrößen in Gruppen eingeteilt werden können oder sind, wobei die ersten Steuergrößen einer Gruppe mit einer gleichen dritten Steuergröße assoziiert sind;
und/oder
der Steuerbefehl zumindest eine der dritten Steuergröße aufweist und/oder auf ihr basiert.

3. Verfahren nach einem der vorangehenden Ansprüche, wobei
das Kontrollsignal indikativ ist für einen ersten Datenbankzustand, wenn wenigstens eine erste Entität auffindbar ist und diese als zweite Entität auffindbar ist, insbesondere das Kontrollsignal indikativ ist für einen ersten ersten Datenbankzustand, wenn genau eine erste Entität auffindbar ist und diese als zweite Entität auffindbar ist und/oder das Kontrollsignal indikativ ist für einen zweiten ersten Datenbankzustand, wenn mehr als eine erste Entität auffindbar ist und diese als zweite Entitäten auffindbar sind;
das Kontrollsignal indikativ ist für einen zweiten Datenbankzustand, wenn wenigstens eine erste Entität auffindbar ist und davon keine als zweite Entität auffindbar ist;
das Kontrollsignal indikativ ist für einen dritten Datenbankzustand, wenn keine erste Entität auffindbar ist;
und/oder
das Kontrollsignal indikativ ist für einen vierten Datenbankzustand und/oder das Kontrollsignal ein Alarmsignal aufweist, wenn zumindest eine Kontrollgröße die spezifische erste Steuergröße in Verbindung mit zumindest einer der zweiten Steuergrößen als ausgezeichnete erste und zweite Steuergrößen definiert.

4. Verfahren nach einem der vorangehenden Ansprüche, wobei
das Kontrollsignal erzeugt wird, bevor und/oder während eine neue Entität, die mit der zumindest einen spezifischen ersten Steuergröße und/oder der zumindest einen zweiten Steuergröße assoziiert werden soll und mittels des Steuerbefehls auffindbar sein soll, in der Datenbank angelegt wird, und wobei vorzugsweise die Daten der neuen Entität, insbesondere die zumindest eine spezifische erste Steuergröße, die zumindest eine zweite Steuergröße, die Assoziierungen oder Kombinationen davon, zumindest teilweise den Daten einer in der Datenbank bestehenden Entität entsprechen und vorzugsweise diese Daten der bestehenden Entität zuvor aus der Datenbank abgerufen wurden;
und/oder
das Kontrollsignal erzeugt wird, bevor und/oder während die Daten einer bestimmten Entität der Vielzahl von Entitäten verarbeitet werden und/oder das Kontrollsignal erzeugt wird ohne Berücksichtigung wenigstens einer bestimmten Entität der Vielzahl von Entitäten, insbesondere derjenigen Entität, deren Daten verarbeitet werden, wobei in allen Fällen vorzugsweise die bestimmte Entität mit der wenigstens einen spezifischen ersten Steuergröße assoziiert und mittels des Steuerbefehls auffindbar ist.

5. Verfahren nach einem der vorangehenden Ansprüche, wobei
das Kontrollsignal alle ersten Entitäten und/oder auch als zweite Entitäten auffindbare erste Entitäten identifiziert oder identifizierbar macht und/oder einen Datenstrom, der diese Entitäten identifiziert oder identifizierbar macht, aufweist;
und/oder
mit dem Steuerbefehl eine Mehrzahl an Entitäten auffindbar sind und mit diesen Entitäten eine Vielzahl an ersten Steuergrößen assoziiert sind, und jede erste Steuergröße davon als spezifische erste Steuergröße verwendet wird, um zusammen mit dem Steuerbefehl ein Kontrollsignal zu erzeugen, und wobei auf Basis der mehreren so erzeugten Kontrollsignale ein Super-Kontrollsignal erzeugt wird, anhand dessen identifizierbar ist, welche gleiche ersten Steuergrößen mit welchen der Mehrzahl an Entitäten assoziiert sind.

6. Verfahren nach einem der vorangehenden Ansprüche, wobei
mit den mit den Entitäten assoziierten ersten Steuergröße jeweils eine Ausgabedarstellung (21a-21c) assoziiert ist, und wobei vorzugsweise das Verfahren ferner aufweist, die Ausgabedarstellung der zumindest einen spezifischen ersten Steuergröße, vorzugsweise die Ausgabedarstellungen aller, insbesondere mit einer vorgegebenen oder vorgebbaren dritten Steuergröße assoziierten, ersten Steuergrößen, die mit der wenigstens einen auffindbaren zweiten Entität, vorzugsweise mit mehreren oder aller der auffindbaren zweiten Entitäten, und/oder mit den mittels des Steuerbefehls auffindbaren Entitäten assoziiert sind, auszugeben,
wobei die Ausgabe vorzugsweise (i) gruppiert nach Entitäten, (ii) auf einer Mensch-Maschine-Schnittstelle, wie etwa einen Monitor, und/oder (iii) in einem maschinenlesbaren Format, wie etwa eine XML-Darstellung, erfolgt.

7. Verfahren nach Anspruch 6, wobei das Verfahren ferner aufweist:
Beeinflussen der Ausgabedarstellung der einzelnen ersten Steuergröße in Abhängigkeit der jeweiligen Kontrollsignale, insbesondere des Super-Kontrollsignals,
wobei das Beeinflussen vorzugsweise aufweist, dass die Ausgabedarstellung in Bezug auf wenigstens einen Parameter, wie ihr Ausgabeformat, ihre Größe, ihre Form, ihre Farbe, ihre Füllung, und/oder ihre Textur, zumindest bereichsweise in Abhängigkeit des Kontrollsignals angepasst wird, insbesondere dass die Ausgabedarstellung von gleichen ersten Steuergrößen entitätsübergreifend gleich beeinflusst wird.

8. Verfahren nach einem der vorangehenden Ansprüche, wobei
zumindest einige der Daten der Vielzahl von Entitäten, insbesondere die ersten Steuergrößen, die zweiten Steuergrößen, die dritten Steuergrößen, die Kontrollgrößen und/oder die Assoziierungen, in einer gemeinsamen Datenstruktur und/oder in einer für jede Entität eigenen Datenstrukturen gespeichert werden, wobei eine entsprechende Datenstruktur vorzugsweise eine temporäre Datenstruktur umfasst oder darstellt und/oder in der Datenbank gespeichert wird oder darin speicherbar ist,
und wobei vorzugsweise das Kontrollsignal durch Berücksichtigung der in der bzw. in den Datenstruktur(en) gespeicherten Daten erzeugt wird, insbesondere die in der bzw. den Datenstruktur(en) gespeicherten Daten dazu entsprechend ausgelesen und/oder verarbeitet werden.

9. Verfahren nach einem der vorangehenden Ansprüche, wobei das Verfahren ferner aufweist:
Empfangen, Abrufen, insbesondere aus der Datenbank, Verarbeiten und/oder Vorgeben der zumindest einen ersten Steuergröße;
Empfangen, Abrufen, insbesondere aus der Datenbank, und/oder Verarbeiten der zumindest einen zweiten Steuergröße und/oder Erzeugen des Steuerbefehls basierend auf den zweiten Steuergrößen;
Empfangen, Abrufen, insbesondere aus der Datenbank, und/oder Verarbeiten der zumindest einen dritten Steuergröße;
Empfangen, Abrufen, insbesondere aus der Datenbank, und/oder Verarbeiten der zumindest einen Kontrollgröße;
und/oder
Kontrollieren der Datenbank und/oder zumindest eines anderen technischen Systems, wie etwa eine andere Datenbank, eine Mensch-Maschine-Schnittstelle, ein Softwaremodul und/oder ein Hardwaremodul, basierend auf dem Kontrollsignal.

10. Vorrichtung zur Datenverarbeitung, wie insbesondere einen Computer, die dazu eingerichtet ist, ein Verfahren nach einem der vorangehenden Ansprüche auszuführen, wobei die Vorrichtung vorzugsweise zumindest eine Datenbank und/oder zumindest eine Datenstruktur aufweist.
